(19) Europäisches Patentamt
European Patent Office
Office européen des brevets

(11) **EP 3 116 946 B1**

(12) **EUROPEAN PATENT SPECIFICATION**

(45) Date of publication and mention
of the grant of the patent:
**21.10.2020 Bulletin 2020/43**

(51) Int Cl.:
*C08K 9/08* *(2006.01)* *C09D 1/00* *(2006.01)*
*C09D 1/02* *(2006.01)* *C09D 1/06* *(2006.01)*
*C08K 3/34* *(2006.01)* *C08K 11/00* *(2006.01)*

(21) Application number: **15761653.3**

(22) Date of filing: **13.03.2015**

(86) International application number:
**PCT/US2015/020451**

(87) International publication number:
**WO 2015/138901 (17.09.2015 Gazette 2015/37)**

(54) **AGGLOMERATED MINERAL COMPOSITES**

AGGLOMERIERTE MINERALISCHE VERBUNDWERKSTOFFE

COMPOSITES DE MATIÈRES MINÉRALES AGGLOMÉRÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2014 US 201461952975 P**

(43) Date of publication of application:
**18.01.2017 Bulletin 2017/03**

(73) Proprietor: **Imerys USA, Inc.
Roswell, GA 30076 (US)**

(72) Inventors:
• **WANG, Bo
Union City, CA 94587 (US)**
• **PATEL, Navin
Lompoc, CA 93436 (US)**

(74) Representative: **Rushton, David John
Haseltine Lake Kempner LLP
Redcliff Quay
120 Redcliff Street
Bristol BS1 6HU (GB)**

(56) References cited:
WO-A1-2011/115755 WO-A1-2013/014450
DE-A1- 4 015 054 US-A- 3 600 329
US-A- 3 682 668 US-A- 5 082 887

## Description

Field of the Disclosure

The present disclosure relates to agglomerated mineral composites, such as for use in coatings.

Background

Coatings such as, for example, paints (oil- and water-based paints), sealants, architectural coatings, and industrial coatings (e.g., coatings other than paper coatings), may be used to improve the visual characteristics of a substrate and/or to protect a substrate. These coatings may be subjected to wear, such as from scrubbing when cleaned. Coatings having properties such as relatively higher oil-absorption may exhibit decreased scrub resistance and wear at a faster rate.

Fillers, pigments, additives, or material mixtures may be added to coating compositions to improve the aesthetics of the coating, chemical or physical properties of the coating, or to lower manufacturing costs. Materials added for one purpose, such as aesthetics, may adversely affect other properties, such as wear-resistance.

Properties of coatings may be governed by the volume of certain fillers or additives, rather than the weight. Binders may also be used to facilitate bonding the filler or additive to the dried coating's structure. However, in some instances, such as interior paints, a coating may be deficient in binder as compared with the volume of additives or fillers. This may result in less than all of the filler being coated with the binder, resulting in higher porosity due to air entrapment during the coating drying process. Coatings with higher porosity exhibit lower scrub-resistance, such as measured by ASTM D2486 (Scrub Resistance of Paint Walls). WO 2013/014450 A1 relates to a method of making a diatomaceous earth granulate which comprises spray-drying a suspension comprising diatomaceous earth particles, a liquid medium and a binder.

Titanium dioxide ($TiO_2$) may be used as a filler or pigment for coating compositions due to its advantageous scattering and opacifying characteristics. However, titanium dioxide is expensive, and thus, it may be desirable to replace some or all of the titanium dioxide in such coating compositions in order to reduce costs Titanium dioxide may be used as a broadband and high efficiency optical scattering pigment to provide opacity in paint films and other coatings. This may allow for a reduced thickness of paints and other coatings, while still providing desired opacity and hiding capability. As levels of titanium dioxide in paints or other coatings are reduced, however, the opacity and hiding capability of the paint film may be adversely affected. This may result in the need to apply thicker coats of paint or extra coats of paint to effectively cover a substrate, which may result in offsetting some or all of the relative benefits of reducing the titanium dioxide content.

It may be desirable to produce coatings with higher scrub-resistance without decreasing the volume of filler or increasing the amount of binder. For example, agglomerated mineral composites, rather than dispersed mineral mixtures may increase the scrub-resistance while maintaining the desirable properties that result from a high volume of filler. Agglomerated mineral composites may also result in other desirable properties, such as, for example, decreased oil-absorption. It may be further desirable to provide coating compositions that increase scrub-resistance or wear-resistance while permitting reduced titanium dioxide content.

## SUMMARY

In the following description, certain aspects and embodiments will become evident. It should be understood that the aspects and embodiments, in their broadest sense, could be practiced without having one or more features of these aspects and embodiments. It should be understood that these aspects and embodiments are merely exemplary.

The present invention is defined in and by the appended claims. One aspect of the disclosure relates to coating compositions and methods that include a coating vehicle including agglomerated mineral composites, including binary mineral composites. The agglomerated mineral composites, particularly blends of diatomaceous earth, perlite, kaolin, mica, talc, or calcium carbonate, may reduce the porosity of a coating and may increase the coating's scrub-resistance. The agglomerated mineral composites may also decrease the oil-absorption. The agglomerated mineral composites may also facilitate using lower amounts of titanium dioxide, such as not more than 10% by weight titanium dioxide relative to the weight of the coating composition.

As used herein, the term "coating vehicle" refers to the liquid components of a coating composition, such as, for example, solvents, binders, and other additives, such as, for example, dispersants, thickeners, defoamers, biocides, and the like.

According to an aspect of this disclosure, an agglomerated mineral composite coating composition may include a coating vehicle, an agglomerated mineral composite including a first inorganic particulate mineral, a second inorganic particulate mineral, and a binder. The first inorganic particulate mineral is chosen from the group consisting of diatomaceous earth and perlite and the second inorganic particulate mineral is chosen from the group consisting of an aluminosilicate, talc, and an alkali earth metal carbonate. The binder facilitates agglomeration of the first inorganic particulate mineral and the second inorganic particulate mineral. The coating composition may contain not more than 10% by weight titanium dioxide relative to the coating composition.

There is also enabled herein but not claimed, a method of making a coating composition including agglomerated mineral composites which may include adding a first inorganic particulate material to a second inorganic particulate material to form a mixture, adding a binder to the mixture to form agglomerated mineral composites, and adding the agglomerated mineral composites to a coating vehicle. The binder may facilitate agglomeration of the first inorganic particulate material to the second inorganic particulate material to form the agglomerated mineral composite. The agglomerated mineral composites may also facilitate using lower amounts of titanium dioxide, such as not more than 10% by weight titanium dioxide relative to the weight of the coating composition.

The first inorganic particulate mineral is chosen from the group consisting of diatomaceous earth and perlite. The second inorganic particulate mineral is chosen from the group consisting of aluminosilicate, talc, and an alkali earth metal carbonate. The aluminosilicate may include kaolin or bentonite. The alkali earth metal carbonate may include calcium carbonate, barium carbonate, or magnesium carbonate. The calcium carbonate may include one or more of precipitated calcium carbonate (PCC), ground calcium carbonate (GCC), dolomite, limestone, chalk, and marble.

According to some aspects, the first inorganic particulate mineral may include diatomaceous earth, and the second inorganic particulate mineral may include kaolin. According to other aspects, the first inorganic particulate mineral may include diatomaceous earth, and the second inorganic particulate mineral may include calcium carbonate. According to still further aspects, the first inorganic particulate mineral may include perlite, and the second inorganic particulate mineral may include kaolin. In yet further aspects, the first inorganic particulate mineral may include perlite, and the second inorganic particulate mineral may include calcium carbonate.

According to a further aspect, the binder may include an alkali metal silicate. The alkali metal silicate may include sodium silicate, potassium silicate, and mixtures thereof.

According to another aspect, the binder may include at least one of an inorganic binder, an organic binder, or an organic-to-inorganic binder. According to another aspect, the inorganic binder may include a cement, such as a calcium aluminate cement. In another aspect, the inorganic binder may include a cement, such as a calcium phosphate cement, or a magnesium phosphate cement. In another aspect, the inorganic binder may include a magnesium aluminum silicate clay.

According to another aspect, the binder may include an organic-to-inorganic binder such as a silicone or ethyl silicate.

According to a further aspect, the binder may include one or more organic binders or biopolymers. For example, the binder may include a cellulose, polyethylene glycol (PEG), polyvinyl alcohol (PVA), polyvinylpyrrolidone (PVP), starch, Candalilla wax, a polyacrylate or related copolymer (e.g., acrylic acid-acrylamide, etc.), a polydiallyldimethylammonium chloride polymer or copolymer (pDADMAC, etc.), dextrin, lignosulfonate, sodium alginate, magnesium stearate, or mixtures thereof.

According to some aspects, the agglomerated mineral composites may have a top particle size ($d_{90}$) of less than about 100 $\mu$m, such as, for example, less than about 80 $\mu$m, less than about 70 $\mu$m, less than about 60 $\mu$m, less than about 55 $\mu$m, less than about 50 $\mu$m, less than about 45 $\mu$m, less than about 40 $\mu$m, less than about 35 $\mu$m, less than about 30 $\mu$m, less than about 25 $\mu$m, or less than about 20 $\mu$m.

According to some aspects, the agglomerated mineral composites may have a median particle size ($d_{50}$) of less than about 40 $\mu$m, such as, for example, less than about 30 $\mu$m, less than about 25 $\mu$m, less than about 20 $\mu$m, less than about 15 $\mu$m, less than about 10 $\mu$m, or less than about 5 $\mu$m.

According to some aspects, the agglomerated mineral composites may have a median particle size ($d_{50}$) ranging from about 1 $\mu$m to about 50 $\mu$m, such as, for example, from about 5 $\mu$m to about 30 $\mu$m, from about 10 $\mu$m to about 30 $\mu$m, from about 15 $\mu$m to about 25 $\mu$m, from about 20 $\mu$m to about 30 $\mu$m, from about 1 $\mu$m to about 15 $\mu$m, from about 5 $\mu$m to about 15 $\mu$m, or from about 5 $\mu$m to about 10 $\mu$m.

According to another aspect, the $d_{90}$ and $d_{50}$ of the agglomerated mineral composites may be substantially similar to the $d_{90}$ and $d_{50}$ of an unagglomerated mixture of the same constituents used to form the agglomerated mineral composites.

According to further aspects, a coating composition may include agglomerated mineral composites that may have an oil absorption ranging between about 50% and about 200%, such as, for example, between about 50% and about 150%, between about 50% and about 100%, between about 70% and about 90%, between about 100% and about 200%, between about 100% and about 150%, between about 120% and about 140%, between about 120% and about 130%, between about 150% and about 200%, between about 150% and about 170%, between about 150% and about 160%, or between about 155% and about 165%. The oil absorption of the coating composition including agglomerated mineral composites may be lower than the oil absorption of a coating composition including an unagglomerated mixture of the same constituents used to form the agglomerated mineral composites.

According to some aspects of the disclosure, the agglomerated mineral composites may enhance the opacity of dry coatings containing a low level of titanium dioxide ($TiO_2$). According to some aspects, the coating composition may contain less than about 10% $TiO_2$, such as, for example, less than about 8% $TiO_2$, less than about 6% $TiO_2$, less than about 4% $TiO_2$, less than about 2% $TiO_2$, or about 0% $TiO_2$ (e.g., substantially-free of $TiO_2$).

According to yet another aspect of this disclosure, the coating vehicle may include a paint vehicle.

According to still another aspect of this disclosure, the coating composition may have a reduced pigment volume concentration (RPVC) greater than 1, for example, greater than 1.5, greater than 2, greater than 2.5, greater than 3, greater than 3.5, or greater than 4.

According to yet another aspect, the coating composition may have a pigment volume concentration (PVC) greater than 60, for example, greater than 65, greater than 70, greater than 75, greater than 80, greater than 85, or greater than 90..

Exemplary objects and advantages will be set forth in part in the description which follows, or may be learned by practice of the exemplary embodiments.

It is to be understood that both the foregoing general description and the following detailed description are exemplary and explanatory only and are not restrictive of the invention, as claimed.

## BRIEF DESCRIPTION OF THE DRAWINGS

FIG. 1 shows an exemplary agglomerated mineral composite including diatomaceous earth and calcium carbonate.
FIG. 2 shows an exemplary agglomerated mineral composite including diatomaceous earth and kaolin.
FIG. 3 shows an agglomerated mineral composite including kaolin and calcium carbonate (not of the invention).
FIG. 4 shows an exemplary agglomerated mineral composite including perlite and calcium carbonate.
FIGS. 5 and 6 show exemplary agglomerated mineral composites including perlite and kaolin.

## DESCRIPTION OF EXEMPLARY EMBODIMENTS

According to some exemplary embodiments, agglomerated mineral composites may be added to coating compositions, such as, for example, paints, sealants, architectural coatings, and industrial coatings. The agglomerated mineral composites may include binary agglomerated mineral composites. Agglomeration may be facilitated through the use of a binder, such as, for example, sodium silicate.

Although certain embodiments of this disclosure may tend to discuss the agglomerated mineral composites in terms of diatomaceous earth, perlite, kaolin, and calcium carbonate, it will be understood that the invention should not be construed as being limited to such embodiments. Similarly, although certain embodiments of this disclosure may tend to discuss the binder in terms of sodium silicate, it will also be understood that the invention should not be construed as being limited to such embodiments.

In some cases, the properties of a coating may be more accurately governed by relative volume of fillers or additives relative to other coating components, rather than relative weight of the fillers or additives. One parameter in the design of coatings, such as paint, includes pigment volume concentration (PVC). PVC may be defined as a percentage of the volume of pigment and other non-volatile constituents, $V_{pigment}$, relative the total composition of the dried coating, $V_{total}$, which is $V_{pigment}$ plus the volume of the paint vehicle or resin:

$$\%PVC = 100 \times V_{pigment}/V_{total}.$$

Another useful parameter for analyzing coating compositions is the critical pigment volume concentration (CPVC). The CPVC may be defined as the PVC where air interfaces develop in the dry coating because the coating composition is deficient in binder with respect to the pigments. For example, there may be insufficient binder to coat all of the pigments and bind all of the pigment to the paint vehicle or resin. Many coating volume properties may change drastically at the CPVC, due to incomplete binding. For example, the deficiency in binder can lead to increased porosity and decreased scrub-resistance. An increased oil-absorption may also increase the porosity of the dry coating.

Typically, the relationship between PVC and CPVC may depend upon the composition of the pigments and may be nonlinear. Because of this relationship, different coatings or paints may be more properly compared by using the reduced pigment volume concentration (RPVC), which is the ratio of PVC over CPVC. Thus, the RPVC can be defined as:

# RPVC= PVC/CPVC.

When the RPVC for two coatings is equal, it is believed that a comparison of the coatings is more accurate.

High PVC coatings, such as, for example, interior paints, may have an RPVC greater than 1. These coatings may be formulated with smaller amounts of emulsion binder, and thus, the CPVC is lower than the PVC. When the RPVC is greater than 1, not all of the pigment or filler particles are covered by the emulsion binder in the dry coating. As a result, the dry coating may exhibit increased porosity. This increased porosity may be due to air entrapment during the coalescing stage of the coating drying process. Without wishing to be bound by a particular theory, it is believed that high-PVC coatings, such as those with an RPVC greater than 1, provide poor scrub-resistance. The scrub-resistance may be measured by standard methods, such as ASTM D2486 (Scrub Resistance of Paint Walls).

The agglomerated mineral composites may include a first inorganic particulate mineral and a second inorganic particulate mineral. The first inorganic particulate mineral is chosen from the group consisting of diatomaceous earth and perlite. The second inorganic particulate mineral is chosen from an aluminosilicate (e.g., kaolin or bentonite), talc, or an alkali earth metal carbonate (e.g., calcium carbonate, barium carbonate, or magnesium carbonate). The calcium carbonate may include one or more of precipitated calcium carbonate (PCC), ground calcium carbonate (GCC), dolomite, limestone, chalk, and marble. Generally, the first inorganic particulate mineral and the second inorganic particulate mineral are different minerals.

A binder may be used to facilitate agglomeration of the second inorganic particulate mineral to the first inorganic particulate mineral. For example, in some embodiments, the binder may be an alkali silica binder. The binder may include an alkali metal silicate.

According to some embodiments, the binder may include at least one of an inorganic binder, an organic binder, or an organic-to-inorganic binder. According to some embodiments, the binder may include an inorganic binder, such as an alkali metal silicate, such as, for example, sodium silicate, potassium silicate, and mixtures thereof. According to some embodiments, the inorganic binder may include a cement, such as a calcium aluminate cement. In some embodiments, the inorganic binder may include a cement, such as a calcium phosphate cement, and/or a magnesium phosphate cement. In some embodiments, the inorganic binder may include a magnesium aluminum silicate clay. According to some embodiments, the binder may include an organic-to-inorganic binder, such as a silicone or ethyl silicate.

According to some embodiments, the binder may include one or more organic binders or biopolymers. For example, the binder may include a cellulose, polyethylene glycol (PEG), polyvinyl alcohol (PVA), polyvinylpyrrolidone (PVP), starch, Candalilla wax, a polyacrylate or related copolymer (e.g., acrylic acid-acrylamide, etc.), a polydiallyldimethylammonium chloride polymer or copolymer (pDADMAC, etc.), dextrin, lignosulfonate, sodium alginate, magnesium stearate, and/or mixtures thereof.

Agglomeration of the first and second inorganic particulate minerals may include using a binder to promote any appropriate agglomeration processes now known to the skilled artisan or hereafter discovered. For example, in some embodiments, agglomeration may include preparing an aqueous solution of the binder, and contacting the binder solution with a blend of the first and second inorganic particulate minerals. One or more agglomerations may be performed, for example, when multiple binders, multiple first inorganic particulate minerals, and/or multiple second inorganic particulate minerals are used. The binder may also improve the adhesion and mechanical strength between components of the agglomerated mineral composites.

In some embodiments, contacting the binder solution with the blend of inorganic particulate minerals may include mixing the binder solution with the blend of inorganic particulate minerals. In some embodiments, the mixing may include agitation. In some embodiments, the blend of the first and second inorganic particulate minerals and the binder solution is mixed sufficiently to at least substantially uniformly distribute the binder solution among the agglomeration points of contact of the first and second inorganic particulate minerals. In some embodiments, the blend of the first and second inorganic particulate minerals and the binder solution may be mixed with sufficient agitation to at least substantially uniformly distribute the binder solution among the agglomeration points of contact of the blend of first and second inorganic particulate minerals without damaging the structure of the first or second inorganic particulate minerals. In some embodiments, the contacting may include low-shear mixing.

In some embodiments, mixing may occur for about one hour. In other embodiments, mixing may occur for less than about one hour. In further embodiments, mixing may occur for about 30 minutes. In yet other embodiments, mixing may occur for about 20 minutes. In still further embodiments, mixing may occur for about 10 minutes.

In some embodiments, mixing may occur at about room temperature (i.e., from about 20°C to about 23°C). In other embodiments, mixing may occur at a temperature ranging from about 20°C to about 50°C. In further embodiments, mixing may occur at a temperature ranging from about 30°C to about 45°C. In still other embodiments, mixing may occur at a temperature of from about 35°C to about 40°C.

According to some embodiments, contacting may include spraying the blend of first and second inorganic particulate minerals with a binder solution. In some embodiments, the spraying may be intermittent. In other embodiments, the spraying may be continuous. In further embodiments, spraying includes mixing the blend of the first and second inorganic particulate minerals while spraying with a binder solution, for example, to expose different agglomeration points of contacts to the spray. In some embodiments, such mixing may be intermittent. In other embodiments, such mixing may be continuous.

In some embodiments, the binder may be present in the binder solution in an amount less than about 40% by weight, relative to the weight of the binder solution. In some embodiments, the binder may range from about 1% to about 10% by weight. In further embodiments, the binder may range from about 1% to about 5% by weight.

An aqueous solution of the binder may be prepared with water. In some embodiments, the water is deionized water. In some embodiments, the water is ultrapure water. In further embodiments, the water has been treated to remove or decrease the levels of metals, toxins, and/or other undesirable elements before it is contacted with the binder.

The amount of aqueous solution contacted with the blend of the first and second inorganic particulate minerals may range from about 0.25 parts to about 1.5 parts of aqueous solution to one part blend. In some embodiments, about 1 part aqueous solution is contacted with about 1 part blend.

The binder facilitates agglomeration of the second inorganic particulate mineral to the first inorganic particulate mineral. According to some embodiments, the second inorganic particulate mineral has a smaller diameter than the first inorganic particulate mineral. Without wishing to be bound by a particular theory, when the first and second inorganic particulate minerals form agglomerations, it is believed that the second particulate mineral attaches to the first particulate mineral and fills interstitial voids between the agglomerated particles. It is believed that by filling these voids, the porosity of the dried coating may be reduced, thereby increasing the scrub-resistance of the coating, even when the RPVC is greater than 1, such as, for example, greater than 1.5, greater than 2.0, greater than 2.5, greater than 3.0, greater than 3.5, or greater than 4.0. By filling the interstitial voids between the particles, the oil-absorption of the coating may also decrease.

According to some embodiments, the ratio of the first inorganic particulate mineral to the second inorganic particulate mineral (first:second) may range from about 10:90 to about 90:10 by weight, for example, from about 20:80 to about 80:20 by weight, about 25:75 to 75:25 by weight, about 40:60 to about 60:40 by weight, or about 50:50 by weight.

Particle size characteristics described herein may be measured via sedimentation of the particulate material in a fully dispersed condition in an aqueous medium using a Sedigraph 5100 particle size analyzer, supplied by Micromeritics Instruments Corporation, Norcross, Ga., USA. The Sedigraph 5100 provides measurements and a plot of the cumulative percentage by weight of particles having a size, referred to in the art as the "equivalent spherical diameter," or "esd."

The particle size characteristics of diatomaceous earth and the agglomerated mineral composites may be measured by a Microtrac laser particle size distribution analyzer.

According to some embodiments, the agglomerated mineral composites may have a top particle size ($d_{90}$) of less than about 100 $\mu$m, such as, for example, less than about 90 $\mu$m, less than about 80 $\mu$m, less than about 70 $\mu$m, less than about 60 $\mu$m, less than about 55 $\mu$m, less than about 50 $\mu$m, less than about 45 $\mu$m, less than about 40 $\mu$m, less than about 35 $\mu$m, less than about 30 $\mu$m, less than about 25 $\mu$m, or less than about 20 $\mu$m.

According to some embodiments, the agglomerated mineral composites may have a median particle size ($d_{50}$) of less than about 50 $\mu$m, such as, for example, less than about 40 $\mu$m, less than about 30 $\mu$m, less than about 25 $\mu$m, less than about 20 $\mu$m, less than about 15 $\mu$m, less than about 10 $\mu$m, less than about 5 $\mu$m, or less than about 3 $\mu$m. According to some embodiments, the agglomerated mineral composite may have a median particle size ($d_{50}$) ranging from about 1 $\mu$m to about 50 $\mu$m, such as, for example, from about 5 $\mu$m to about 30 $\mu$m, from about 10 $\mu$m to about 30 $\mu$m, from about 15 $\mu$m to about 25 $\mu$m, from about 20 $\mu$m to about 30 $\mu$m, from about 3 $\mu$m to about 15 $\mu$m, from about 5 $\mu$m to about 15 $\mu$m, from about 5 $\mu$m to about 10 $\mu$m, or from about 3 $\mu$m to about 5 $\mu$m.

According to some embodiments, the agglomerated mineral composites may have a bottom particle size ($d_{10}$) of less than about 20 $\mu$m, such as, for example, less than about 15 $\mu$m, less than about 10 $\mu$m, less than about 5 $\mu$m, less than about 3 $\mu$m, less than about 1 $\mu$m, or less than about 0.5 $\mu$m. According to some embodiments, the agglomerated mineral composite may have a bottom particle size ($d_{10}$) ranging from about 0.5 $\mu$m to about 20 $\mu$m, such as, for example, from about 10 $\mu$m to about 20 $\mu$m, from about 5 $\mu$m to about 15 $\mu$m, from about 5 $\mu$m to about 10 $\mu$m, from about 0.5 $\mu$m to about 5 $\mu$m, from about 0.5 $\mu$m to about 3 $\mu$m, from about 3 $\mu$m to about 5 $\mu$m, from about 1 $\mu$m to about 3 $\mu$m, or from about 0.5 $\mu$m to about 1 $\mu$m.

According to some embodiments, the $d_{90}$ and/or $d_{50}$ of the agglomerated mineral composites may be substantially similar to the $d_{90}$ and/or $d_{50}$ of an unagglomerated mixture of the same constituents used to form the agglomerated mineral composites.

According to some embodiments, an agglomerated mineral composite including diatomaceous earth and calcium carbonate may have a $d_{90}$ of less than about 100 $\mu$m, such as, for example, less than about 90 $\mu$m, less than about 80 $\mu$m, less than about 70 $\mu$m, less than about 60 $\mu$m, less than about 55 $\mu$m, less than about 50 $\mu$m, less than about 45 $\mu$m, less than about 40 $\mu$m, less than about 35 $\mu$m, less than about 30 $\mu$m, less than about 25 $\mu$m, or less than about 20 $\mu$m. According to some embodiments, the agglomerated mineral composite including diatomaceous earth and calcium carbonate may have a median particle size (dso) of less than about 50 $\mu$m, such as, for example, less than about 40 $\mu$m, less than about 30 $\mu$m, less than about 25 $\mu$m, less than about 20 $\mu$m, less than about 15 $\mu$m, less than about 10 $\mu$m, less than about 5 $\mu$m, or less than about 3 $\mu$m. According to some embodiments, the agglomerated mineral composite including diatomaceous earth and calcium carbonate may have a $d_{50}$ ranging from about 1 $\mu$m to about 50 $\mu$m, such as, for example, from about 5 $\mu$m to about 30 $\mu$m, from about 10 $\mu$m to about 30 $\mu$m, from about 15 $\mu$m to about 25 $\mu$m, from about 20 $\mu$m to about 30 $\mu$m, from about 3 $\mu$m to about 15 $\mu$m, from about 5 $\mu$m to about 15 $\mu$m, from about 5 $\mu$m to about 10 $\mu$m, or from about 3 $\mu$m to about 5 $\mu$m.

According to some embodiments, the agglomerated mineral composites including diatomaceous earth and calcium carbonate may have a bottom particle size ($d_{10}$) of less than about 20 $\mu$m, such as, for example, less than about 15 $\mu$m, less than about 10 $\mu$m, less than about 5 $\mu$m, less than about 3 $\mu$m, less than about 1 $\mu$m, or less than about 0.5 $\mu$m. According to some embodiments, the agglomerated mineral composites including diatomaceous earth and calcium carbonate may have a bottom particle size ($d_{10}$) ranging from about 0.5 $\mu$m to about 20 $\mu$m, such as, for example, from about 10 $\mu$m to about 20 $\mu$m, from about 5 $\mu$m to about 15 $\mu$m, from about 5 $\mu$m to about 10 $\mu$m, from about 0.5 $\mu$m to about 5 $\mu$m, from about 0.5 $\mu$m to about 3 $\mu$m, from about 3 $\mu$m to about 5 $\mu$m, from about 1 $\mu$m to about 3 $\mu$m, or from about 0.5 $\mu$m to about 1 $\mu$m.

The $d_{90}$ and/or $d_{50}$ of the agglomerated mineral composite including diatomaceous earth and calcium carbonate may be substantially similar to the $d_{90}$ and/or dso of an unagglomerated mixture of the same diatomaceous earth and calcium carbonate.

According to some embodiments, an agglomerated mineral composite including perlite and calcium carbonate may have a $d_{90}$ of less than about 100 $\mu$m, such as, for example, less than about 90 $\mu$m, less than about 80 $\mu$m, less than about 70 $\mu$m, less than about 60 $\mu$m, less than about 55 $\mu$m, less than about 50 $\mu$m, less than about 45 $\mu$m, less than about 40 $\mu$m, less than about 35 $\mu$m, less than about 30 $\mu$m, less than about 25 $\mu$m, or less than about 20 $\mu$m. According to some embodiments, the agglomerated mineral composite including perlite and calcium carbonate may have a $d_{50}$ of less than about 50 $\mu$m, such as, for example, less than about 40 $\mu$m, less than about 30 $\mu$m, less than about 25 $\mu$m, less than about 20 $\mu$m, less than about 15 $\mu$m, less than about 10 $\mu$m, less than about 5 $\mu$m, or less than about 3 $\mu$m. According to some embodiments, the agglomerated mineral composite including perlite and calcium carbonate may have a median particle size ($d_{50}$) ranging from about 1 $\mu$m to about 50 $\mu$m, such as, for example, from about 5 $\mu$m to about 30 $\mu$m, from about 10 $\mu$m to about 30 $\mu$m, from about 15 $\mu$m to about 25 $\mu$m, from about 20 $\mu$m to about 30 $\mu$m, from about 3 $\mu$m to about 15 $\mu$m, from about 5 $\mu$m to about 15 $\mu$m, from about 5 $\mu$m to about 10 $\mu$m, or from about 3 $\mu$m to about 5 $\mu$m. According to some embodiments, the agglomerated mineral composites including perlite and calcium carbonate may have a bottom particle size ($d_{10}$) of less than about 20 $\mu$m, such as, for example, less than about 15 $\mu$m, less than about 10 $\mu$m, less than about 5 $\mu$m, less than about 3 $\mu$m, less than about 1 $\mu$m, or less than about 0.5 $\mu$m. According to some embodiments, the agglomerated mineral composites including perlite and calcium carbonate may have a bottom particle size ($d_{10}$) ranging from about 0.5 $\mu$m to about 20 $\mu$m, such as, for example, from about 10 $\mu$m to about 20 $\mu$m, from about 5 $\mu$m to about 15 $\mu$m, from about 5 $\mu$m to about 10 $\mu$m, from about 0.5 $\mu$m to about 5 $\mu$m, from about 0.5 $\mu$m to about 3 $\mu$m, from about 3 $\mu$m to about 5 $\mu$m, from about 1 $\mu$m to about 3 $\mu$m, or from about 0.5 $\mu$m to about 1 $\mu$m.

The $d_{90}$ and/or $d_{50}$ of the agglomerated mineral composite including perlite and calcium carbonate may be substantially similar to the $d_{90}$ and/or $d_{50}$ of an unagglomerated mixture of the same perlite and calcium carbonate.

According to some embodiments, an agglomerated mineral composite including diatomaceous earth and kaolin may have a top particle size ($d_{90}$) of less than about 100 $\mu$m, such as, for example, less than about 90 $\mu$m, less than about 80 $\mu$m, less than about 70 $\mu$m, less than about 60 $\mu$m, less than about 55 $\mu$m, less than about 50 $\mu$m, less than about 45 $\mu$m, less than about 40 $\mu$m, less than about 35 $\mu$m, less than about 30 $\mu$m, less than about 25 $\mu$m, or less than about 20 $\mu$m. According to some embodiments, the agglomerated mineral composite including diatomaceous earth and kaolin may have a median particle size ($d_{50}$) of less than about 50 $\mu$m, such as, for example, less than about 40 $\mu$m, less than about 30 $\mu$m, less than about 25 $\mu$m, less than about 20 $\mu$m, less than about 15 $\mu$m, less than about 10 $\mu$m, less than about 5 $\mu$m, or less than about 3 $\mu$m. According to some embodiments, the agglomerated mineral composite including diatomaceous earth and kaolin may have a median particle size ($d_{50}$) ranging from about 1 $\mu$m to about 50 $\mu$m, such as, for example, from about 5 $\mu$m to about 30 $\mu$m, from about 10 $\mu$m to about 30 $\mu$m, from about 15 $\mu$m to about 25 $\mu$m, from about 20 $\mu$m to about 30 $\mu$m, from about 3 $\mu$m to about 15 $\mu$m, from about 5 $\mu$m to about 15 $\mu$m, from about 5 $\mu$m to about 10 $\mu$m, or from about 3 $\mu$m to about 5 $\mu$m. According to some embodiments, the agglomerated mineral composites including diatomaceous earth and kaolin may have a bottom particle size ($d_{10}$) of less than about 20 $\mu$m, such as, for example, less than about 15 $\mu$m, less than about 10 $\mu$m, less than about 5 $\mu$m, less than about 3 $\mu$m, less than about 1 $\mu$m, or less than about 0.5 $\mu$m. According to some embodiments, the agglomerated mineral composites including diatomaceous earth and kaolin may have a bottom particle size ($d_{10}$) ranging from about 0.5 $\mu$m to about 20 $\mu$m, such as, for example, from about 10 $\mu$m to about 20 $\mu$m, from about 5 $\mu$m to about 15 $\mu$m, from about 5 $\mu$m to about 10 $\mu$m, from about 0.5 $\mu$m to about 5 $\mu$m, from about 0.5 $\mu$m to about 3 $\mu$m, from about 3 $\mu$m to about 5 $\mu$m, from about 1 $\mu$m to about 3 $\mu$m, or from about 0.5 $\mu$m to about 1 $\mu$m.

The $d_{90}$ and/or $d_{50}$ of the agglomerated mineral composite including diatomaceous earth and kaolin may be substantially similar to the $d_{90}$ and/or $d_{50}$ of an unagglomerated mixture of the same diatomaceous earth and kaolin.

According to some embodiments, an agglomerated mineral composite including perlite and kaolin may have a $d_{90}$ of less than about 100 μm, such as, for example, less than about 90 μm, less than about 80 μm, less than about 70 μm, less than about 60 μm, less than about 55 μm, less than about 50 μm, less than about 45 μm, less than about 40 μm, less than about 35 μm, less than about 30 μm, less than about 25 μm, or less than about 20 μm. According to some embodiments, the agglomerated mineral composite including perlite and kaolin may have a $d_{50}$ of less than about 50 μm, such as, for example, less than about 40 μm, less than about 30 μm, less than about 25 μm, less than about 20 μm, less than about 15 μm, less than about 10 μm, less than about 5 μm, or less than about 3 μm. According to some embodiments, the agglomerated mineral composite including perlite and kaolin may have a median particle size ($d_{50}$) ranging from about 1 μm to about 50 μm, such as, for example, from about 5 μm to about 30 μm, from about 10 μm to about 30 μm, from about 15 μm to about 25 μm, from about 20 μm to about 30 μm, from about 3 μm to about 15 μm, from about 5 μm to about 15 μm, from about 5 μm to about 10 μm, or from about 3 μm to about 5 μm. According to some embodiments, the agglomerated mineral composites including perlite and kaolin may have a bottom particle size ($d_{10}$) of less than about 20 μm, such as, for example, less than about 15 μm, less than about 10 μm, less than about 5 μm, less than about 3 μm, less than about 1 μm, or less than about 0.5 μm. According to some embodiments, the agglomerated mineral composites including perlite and kaolin may have a bottom particle size ($d_{10}$) ranging from about 0.5 μm to about 20 μm, such as, for example, from about 10 μm to about 20 μm, from about 5 μm to about 15 μm, from about 5 μm to about 10 μm, from about 0.5 μm to about 5 μm, from about 0.5 μm to about 3 μm, from about 3 μm to about 5 μm, from about 1 μm to about 3 μm, or from about 0.5 μm to about 1 μm.

The $d_{90}$ and/or $d_{50}$ of the agglomerated mineral composite including perlite and kaolin may be substantially similar to the $d_{90}$ and/or $d_{50}$ of an unagglomerated mixture of the same perlite and kaolin.

An agglomerated mineral composite including kaolin and calcium carbonate (not of the invention) may have a $d_{90}$ of less than about 100 μm, such as, for example, less than about 90 μm, less than about 80 μm, less than about 70 μm, less than about 60 μm, less than about 55 μm, less than about 50 μm, less than about 45 μm, less than about 40 μm, less than about 35 μm, less than about 30 μm, less than about 25 μm, or less than about 20 μm. The agglomerated mineral composite including kaolin and calcium carbonate may have a $d_{50}$ of less than about 50 μm, such as, for example, less than about 40 μm, less than about 30 μm, less than about 25 μm, less than about 20 μm, less than about 15 μm, less than about 10 μm, less than about 5 μm, or less than about 3 μm. The agglomerated mineral composite including kaolin and calcium carbonate (not of the invention) may have a median particle size ($d_{50}$) ranging from about 1 μm to about 50 μm, such as, for example, from about 5 μm to about 30 μm, from about 10 μm to about 30 μm, from about 15 μm to about 25 μm, from about 20 μm to about 30 μm, from about 3 μm to about 15 μm, from about 5 μm to about 15 μm, from about 5 μm to about 10 μm, or from about 3 μm to about 5 μm. The agglomerated mineral composites including kaolin and calcium carbonate may have a bottom particle size ($d_{10}$) of less than about 20 μm, such as, for example, less than about 15 μm, less than about 10 μm, less than about 5 μm, less than about 3 μm, less than about 1 μm, or less than about 0.5 μm. The agglomerated mineral composites including kaolin and calcium carbonate may have a bottom particle size ($d_{10}$) ranging from about 0.5 μm to about 20 μm, such as, for example, from about 10 μm to about 20 μm, from about 5 μm to about 15 μm, from about 5 μm to about 10 μm, from about 0.5 μm to about 5 μm, from about 0.5 μm to about 3 μm, from about 3 μm to about 5 μm, from about 1 μm to about 3 μm, or from about 0.5 μm to about 1 μm.

The $d_{90}$ of the agglomerated mineral composite including kaolin and calcium carbonate may be larger than the $d_{90}$ of an unagglomerated mixture of the same kaolin and calcium carbonate. The $d_{50}$ of the agglomerated mineral composite including kaolin and calcium carbonate may be substantially similar to the $d_{50}$ of an unagglomerated mixture of the same kaolin and calcium carbonate.

According to some embodiments, a coating composition including agglomerated mineral composites may have an oil absorption ranging between about 50% and about 200%, such as, for example, between about 50% and about 150%, between about 50% and about 100%, between about 70% and about 90%, between about 100% and about 200%, between about 100% and about 150%, between about 120% and about 140%, between about 120% and about 130%, between about 150% and about 200%, between about 150% and about 170%, between about 150% and about 160%, or between about 155% and about 165%. The oil absorption of the coating composition having agglomerated mineral composites may be lower than the oil absorption of a coating composition including an unagglomerated mixture of the same constituents used to form the agglomerated mineral composites.

A coating composition including agglomerated mineral composites including kaolin and calcium carbonate (not of the invention) may have an oil absorption ranging between about 20% and about 100%, such as, for example, between about 50% and about 100%, between about 70% and about 90%, or between about 75% and 85%. The oil absorption of the coating composition including agglomerated mineral composite including kaolin and calcium carbonate may be higher than the oil absorption of a similar composition containing a mixture of kaolin and calcium carbonate in an unagglomerated form.

According to some embodiments, a coating composition including agglomerated mineral composite including diatomaceous earth and calcium carbonate may have an oil absorption ranging between about 75% and about 150%, such as, for example, between about 100% and about 150%, or between about 120% and about 130%. The oil absorption of an agglomerated mineral composite including diatomaceous earth and calcium carbonate may be lower than the oil absorption of a similar composition containing a mixture of diatomaceous earth and calcium carbonate in an unagglomerated form.

According to some embodiments, a coating composition including agglomerated mineral composite including perlite and calcium carbonate may have an oil absorption ranging between about 75% and about 150%, such as, for example, between about 100% and about 150%, or between about 120% and about 130%. The oil absorption of a coating composition including agglomerated mineral composite including perlite and calcium carbonate may be lower than the oil absorption of a similar composition containing a mixture of perlite and calcium carbonate in an unagglomerated form.

According to some embodiments, a coating composition including agglomerated mineral composite including diatomaceous earth and kaolin may have an oil absorption ranging between about 100% and about 200%, such as, for example, between about 125% and about 175%, between about 150% and about 170%, or between about 155% and about 165%. The oil absorption of a coating composition including agglomerated mineral composite including diatomaceous earth and kaolin may be lower than the oil absorption of a similar composition containing a mixture of diatomaceous earth and kaolin in an unagglomerated form.

According to some embodiments, a coating composition including agglomerated mineral composite including perlite and kaolin may have an oil absorption ranging between about 100% and about 200%, such as, for example, between about 125% and about 175%, between about 150% and about 170%, or between about 150% and about 160%. The oil absorption of a coating composition including agglomerated mineral composite including perlite and kaolin may be lower than the oil absorption of a similar composition containing a mixture of perlite and kaolinin an unagglomerated form.

According to some exemplary embodiments, the agglomerated mineral composites may enhance the opacity of dry coatings containing a low level of titanium dioxide ($TiO_2$). For example, a coating composition may contain less than about 10% $TiO_2$, such as, for example, less than about 8% $TiO_2$, less than about 6% $TiO_2$, less than about 4% $TiO_2$, less than about 2% $TiO_2$, or about 0% $TiO_2$ (e.g., substantially-free of $TiO_2$).

According to some embodiments, a coating composition containing agglomerated mineral composites may have a Hunter L value greater than about 90. For example, the coating composition containing agglomerated mineral composites may have a Hunter L value greater than about 92, greater than about 93, greater than about 94, greater than about 95, greater than about 96, greater than about 97, or greater than about 98.

According to some embodiments, a coating composition containing agglomerated mineral composites may have a Hunter a value between about -0.5 and 0.5. For example, the coating composition containing agglomerated mineral composites may have a Hunter a value between about -0.5 and 0, between about -0.3 and -0.1, between about -0.2 and 0.0, between about -0.1 and 0.1, between about 0 and 0.5, between about 0 and 0.3, between about 0 and 0.1, between about 0.2 and 0.3, or between about 0.3 and 0.4.

According to some embodiments, a coating composition containing agglomerated mineral composites may have a Hunter b value less than about 5. For example, the coating composition containing agglomerated mineral composites may have a Hunter b value less than about 4, less than about 3.5, less than about 3.3, less than about 3, less than about 2.5, less than about 2.4, less than about 2.3, less than about 2.2, less than about 2, less than about 1.9, less than about 1.7, less than about 1.5, less than about 1.3, less than about 1.2, or less than about 1.1.

According to some embodiments, a coating composition containing agglomerated mineral composites may have an opacity greater than about 80%. The opacity may be measured using a Datacolor 550 Spectrophotometer with QC input software and using Leant 2B drawdowns, a Peopac Form 1B card, with film thicknesses of 3 mils (75 microns) and 6 mils (150 microns). For example, a coating composition containing agglomerated mineral composites may have an opacity greater than about 85%, greater than about 87%, greater than about 88%, greater than about 90%, greater than about 92%, greater than about 93%, or greater than about 95%. An opacity of 0% represents a material that is completely transparent, while an opacity of 100% represents a material that is completely opaque.

Although the embodiments below are generally discussed with respect to paint compositions, it is understood that the principles disclosed herein are applicable to various other forms of coatings.


EXAMPLE 1

Table 1 below shows an exemplary 73% PVC paint composition. Two samples were prepared with this composition: a control composition and an agglomerated mineral composite composition. The control paint composition includes fine calcined kaolin, diatomaceous earth (DE, natural grade), and calcium carbonate ($CaCO_3$, $d_{50}$ = 7 microns). The control composition also includes titanium dioxide ($TiO_2$) and vinyl acrylic emulsion binder. The control paint composition includes 27% volume solids and less than 100 g/l volatile organic compounds (VOC).

The exemplary agglomerated mineral composite paint composition having agglomerated mineral composites is similar to the control composition, except that the calcined kaolin and DE minerals were agglomerated by the addition of 5% by weight sodium silicate as a binder with 10% by weight water. The percent of sodium silicate (e.g., binder) and water was measured relative to the total weight of the other components of the agglomerated mineral composites (e.g., 5 g sodium silicate per 100 g DE and kaolin). The DE and kaolin were first mixed using a blender. Sodium silicate was added to the mixture to promote agglomeration. The agglomerated samples were then dried and screened through a 150 mesh screen for proper Hegman dispersion of the paint. The agglomerated particles were then added to a paint formulation to create the exemplary paint compositions.

The PVC is 73% based on the total solids volume of 27% (VOC 87 g/l). The CPVC for the exemplary sample is 24%. Therefore the RPVC for the exemplary sample composition is 3.04.

TABLE 1: Exemplary Paint Compositions

| Raw Materials | Vol. (l), (gal) | Amt. (kg), (lbs) | % |
|---|---|---|---|
| Water | 195.3 (51.6) | 195.3 (430.5) | 38.7 |
| Nuosept 95 | 1.1 (0.3) | 1.4 (3.0) | 0.3 |
| Natrosol Plus 330 | 0.4 (0.1) | 0.7 (1.5) | 0.1 |
| Water | 34.0 (9.0) | 34.0 (75.0) | 6.7 |
| Propylene Glycol | 6.4 (1.7) | 6.8 (15.0) | 1.3 |
| DrewPlus L-475 | 1.5 (0.4) | 1.4 (3.0) | 0.3 |
| Tamol 731A | 3.8 (1.0) | 4.1 (9.0) | 0.8 |
| AMP 95 | 0.8 (0.2) | 0.7 (1.5) | 0.1 |
| Triton CF 10 | 1.9 (0.5) | 2.0 (4.5) | 0.4 |
| $TiO_2$ | 5.7 (1.5) | 22.7 (50.0) | 4.5 |
| Kaolin | 34.8 (9.2 | 91.2 (201.0) | 18.1 |
| Diatomaceous Earth | 20.4 (5.4) | 44.9 (99.0) | 8.9 |
| $CaCO_3$ (7$\mu$m) | 12.5 (3.3) | 34.0 (75.0) | 6.7 |
| Encor 300 | 51.1 (13.5) | 54.4 (120.0) | 10.8 |
| Texanol | 5.7 (1.5) | 5.4 (12.0) | 1.1 |
| Acrysol RM-825 | 5.3 (1.4) | 5.4 (12.0) | 1.1 |
| **Total** | **380.7 (100.6)** | **504.4 (1112.0)** | **100.0** |

Table 2 below shows various performance properties for the sample paint compositions of Table 1. Scrub-resistance was measured by ASTM D2486 using a 7-mil side-by-side wet paint film thickness on a Leneta scrub test panel substrate. The wet side-by-side paint films were kept at room temperature for seven days. The Gardco washability and wear tester, manufactured by Paul N. Gardner Company, was used to perform the scrub-resistance test.

TABLE 2: Performance Properties

| Properties | Control 1 | Sample A (Aggregated Composite) |
|---|---|---|
| Viscosity KU @ 25C | 111 | 105 |
| Density (kg / l), (lbs. / gal.) | 1.35 (11.26) | 1.33 (11.13) |
| Contrast Ratio @ 3.0 mils | 99.5 | 99.5 |
| Contrast Ratio @ 6.0 mils | 99.9 | 99.9 |
| Reflectance | 91.8 | 90.7 |
| Whiteness | 80.6 | 80.3 |
| Yellowness | 4.5 | 4.2 |

(continued)

| Properties | Control 1 | Sample A (Aggregated Composite) |
|---|---|---|
| Hunter L | 95.8 | 95.2 |
| Hunter b | 2.4 | 2.3 |
| Gloss @ 60° unsealed | 2.6 | 2.6 |
| Sheen @ 85° unsealed | 12.8 | 9.6 |
| Scrub-resistance (ASTM D2486) | 65 | 175 |

As can be seen in Table 2, almost all of the properties for the paint composition with the agglomerated mineral composites are comparable to the control composition, except that the scrub-resistance for the aggregated composite sample is nearly three times greater than the control sample. Accordingly, it is believed that the agglomeration of mineral composites may yield desirable increases in properties, such as scrub-resistance, without adversely affecting certain other properties, such as whiteness or reflectance.

EXAMPLE 2

Table 3 below shows the general composition for another exemplary paint composition of a second control sample having a PVC of 71 with 29% volume of solids.

TABLE 3: Exemplary Paint Composition

| Raw Materials | Vol. (l), (gal) | Amt. (kg), (lbs) | % |
|---|---|---|---|
| Water | 204.4 (54.0) | 204.1 (450.0) | 39.0 |
| Nuosept 95 | 1.1 (0.3) | 1.3 (3.0) | 0.3 |
| Natrosol Plus 330 | 1.5 (0.4) | 2.3 (5.0) | 0.4 |
| Water | 18.2 (4.8) | 18.1 (40.0) | 3.5 |
| Propylene Glycol | 4.5 (1.2) | 4.5 (10.0) | 0.9 |
| DrewPlus L-475 | 2.3 (0.6) | 2.0 (4.5) | 0.4 |
| Tamol 731A | 4.2 (1.1) | 4.5 (10.0) | 0.9 |
| Triton CF 10 | 2.3 (0.6) | 2.3 (5.0) | 0.4 |
| AMP 95 | 0.4 (0.1) | 0.2 (0.5) | 0.4 |
| $TiO_2$ | 5.7 (1.5) | 22.7 (50.0) | 4.4 |
| $CaCO_3$ (7$\mu$m) | 14.0 (3.7) | 38.6 (85.0) | 7.5 |
| Kaolin | 51.5 (13.6) | 134.7 (297.0) | 26.1 |
| Diatomaceous Earth | 6.8 (1.8) | 15.0 (33.0) | 2.9 |
| Encor 300 | 55.3 (14.6) | 59.0 (130.0) | 11.4 |
| Texanol | 3.4 (0.9) | 3.2 (7.0) | 0.6 |
| Acrysol RM 825 | 4.5 (1.2) | 4.5 (10.0) | 0.9 |
| Total | 380.1 (100.2) | 517 (1140.0) | 100.0 |

Additional samples containing agglomerated mineral composites of diatomaceous earth and kaolin were prepared with varying amounts of sodium silicate binder and water by weight based on the total weight of the DE and kaolin. These additional compositions are substantially similar to the composition shown in Table 3, except that the DE and kaolin are agglomerated rather than dispersed. The various binder and water amounts for each sample are shown below in Table 4.

TABLE 4: Agglomerated Mineral Composites

| Sample | Control 2 (Table 3) | B | C | D | E | F | G | H | I |
|---|---|---|---|---|---|---|---|---|---|
| % H$_2$0 | 0% | 5% | 5% | 5% | 5% | 10% | 10% | 10% | 10% |
| % Na Silicate | 0% | 1% | 2% | 3% | 4% | 1% | 2% | 3% | 4% |

Table 5 below shows various properties of each of agglomerated mineral composite samples B-I, as compared with the second control sample having non-agglomerated minerals.

TABLE 5: Properties of Agglomerated Mineral Composite Compositions

| Property | Control 2 | B | C | D | E | F | G | H | I |
|---|---|---|---|---|---|---|---|---|---|
| Viscosity KU @ 25C | 107 | 122 | 113 | 1.9 | 108 | 114 | 109 | 103 | 108 |
| Contrast Ratio @ 3.0 mils | 99.2 | 99.3 | 99.4 | 99.2 | 99.4 | 99.3 | 99.2 | 99.3 | 99.2 |
| Contrast Ratio @ 6.0 mils | 99.9 | 99.9 | 99.9 | 99.9 | 99.9 | 99.9 | 99.9 | 99.9 | 99.9 |
| Reflectance | 93.5 | 93.4 | 93.5 | 93.4 | 93.3 | 93.6 | 93.5 | 93.5 | 93.4 |
| Whiteness | 89.5 | 89.4 | 89.4 | 89.3 | 89.3 | 89.5 | 89.4 | 89.4 | 89.4 |
| Yellowness | 3.6 | 3.5 | 3.6 | 3.6 | 3.6 | 3.7 | 3.7 | 3.7 | 3.6 |
| Hunter L | 96.9 | 96.8 | 96.8 | 96.8 | 96.7 | 96.9 | 96.8 | 96.8 | 96.8 |
| Hunter b | 1.1 | 1.1 | 1.1 | 1.1 | 1.1 | 1.1 | 1.1 | 1.1 | 1.1 |
| Gloss @ 60° unsealed | 2.7 | 2.7 | 2.7 | 2.7 | 2.7 | 2.8 | 2.8 | 2.8 | 2.8 |
| Sheen @ 85° unsealed | 21.6 | 21.2 | 20.2 | 19.8 | 18.9 | 24.9 | 24.6 | 23.6 | 20.8 |
| Oil-Absorption (%) | 124 | 128 | 122 | 121 | 114 | 116 | 124 | 128 | 127 |
| Scrub-Resistance | 49 | 57 | 75 | 126 | 244 | 53 | 66 | 85 | 235 |

As shown in Table 5, the agglomerated mineral composite compositions have similar properties to the control composition (e.g., Hunter L, contrast ratios), except that the scrub-resistance increases with increasing amounts of sodium silicate binder to facilitate agglomeration of the mineral composites. For example, the scrub-resistance at 4% sodium silicate, with either 5% water or 10% water, is almost five times the scrub-resistance of the control composition.

EXAMPLE 3

Table 6 shows several exemplary particle size comparisons for agglomerated mineral composite samples. Table 6 also compares the Hunter L, a, and b values of the mineral composites with their individual constituents, as well as comparing the values for both the mixed (e.g., non-agglomerated) particles and the agglomerated particles. Sodium silicate was used to agglomerate the various constituent minerals.

TABLE 6: Agglomerated Mineral Composites

| Sample Type | Mineral A | Mineral B | Oil-absorption (%) | Wet Density (kg/m$^3$), (lb/cf) | $d_{10}$ (μm) | $d_{50}$ (μm) | $d_{90}$ (μm) | Hunter L | Hunter b |
|---|---|---|---|---|---|---|---|---|---|
| Control | Perlite | N/A | 259 | 192 (12) | 11.45 | 25.88 | 50.92 | 93.57 | 4.91 |
| Control | DE | N/A | 268 | 240 (15) | 5.12 | 13.11 | 28.50 | 93.22 | 4.88 |
| Control | Calcined kaolin | N/A | 138 | 625 (39) | 0.44 | 2.10 | 10.47 | 97.09 | 2.05 |
| Control | CaCO$_3$ | N/A | 32 | 1249 (78) | 0.83 | 3.45 | 9.58 | 97.29 | 0.53 |
| Mixed | Calcined kaolin | CaCO$_3$ | 68 | 673 (42) | 0.55 | 2.47 | 9.98 | 97.85 | 1.76 |
| *Agglomerated | Calcined kaolin | CaCO$_3$ | 81 | 673 (42) | 0.76 | 3.31 | 22.15 | 96.85 | 1.68 |
| Mixed | DE | CaCO$_3$ | 141 | 416 (26) | 2.19 | 9.98 | 24.73 | 94.28 | 4.12 |
| Agglomerated | DE | CaCO$_3$ | 125 | 400 (25) | 1.56 | 8.41 | 24.48 | 94.37 | 3.40 |
| Mixed | Perlite | CaCO$_3$ | 131 | 288 (18) | 7.32 | 23.79 | 49.19 | 93.51 | 2.03 |
| Agglomerated | Perlite | CaCO$_3$ | 126 | 304 (19) | 7.55 | 24.53 | 58.27 | 95.04 | 1.85 |
| Mixed | DE | Calcined kaolin | 183 | 368 (23) | 1.44 | 9.46 | 23.97 | 94.88 | 4.35 |
| Agglomerated | DE | Calcined kaolin | 160 | 352 (22) | 1.29 | 8.25 | 25.58 | 95.04 | 3.13 |
| Mixed | Perlite | Calcined kaolin | 172 | 288 (18) | 7.04 | 23.91 | 49.47 | 93.73 | 2.69 |
| Agglomerated | Perlite | Calcined kaolin | 156 | 352 (22) | 6.92 | 23.46 | 48.33 | 94.57 | 2.24 |
| *Not of the invention | | | | | | | | | |

As shown in Table 6, when fine particles, such as kaolin and calcium carbonate, are mixed or agglomerated with larger particles, such as perlite or diatomaceous earth, the particle sizes (e.g., $d_{10}$, $d_{50}$, and $d_{90}$) generally remain close to the same as the pure large particle size. As also shown in Table 6, oil-absorption decreases when the composite particles are agglomerated, as compared with mixed particles or purely large particles. Without wishing to be bound by a particular theory, it is believed that when small particles, such as kaolin or calcium carbonate, are agglomerated with larger particles, such as diatomaceous earth or perlite, the small particles fill the interstitial pores between the large particles, thereby inhibiting oil-absorption.

As also shown in Table 6, when small particles are agglomerated, the agglomerated particle size generally increases. For example, Table 6 shows that when kaolin and calcium carbonate are agglomerated, the $d_{90}$ particle size increases from about 9.98 $\mu$m to about 22.15 $\mu$m. Without wishing to be bound by a particular theory, when small particles are agglomerated, such as kaolin and calcium carbonate, the larger agglomerated particle size may increase oil-absorption as compared with the mixed particles alone.

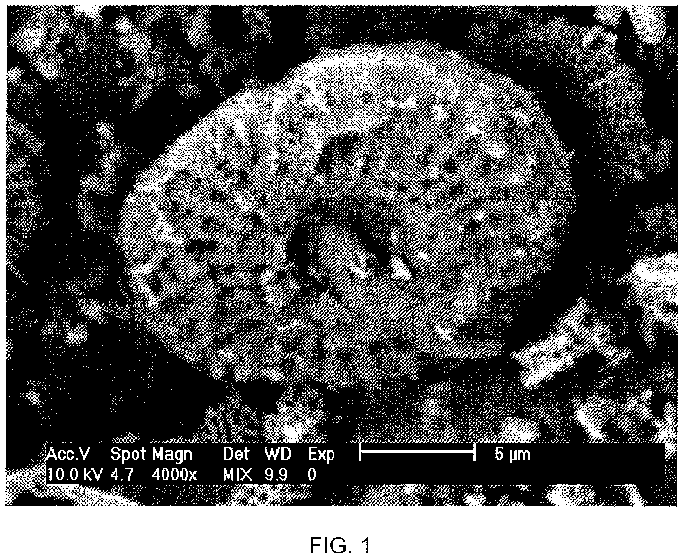

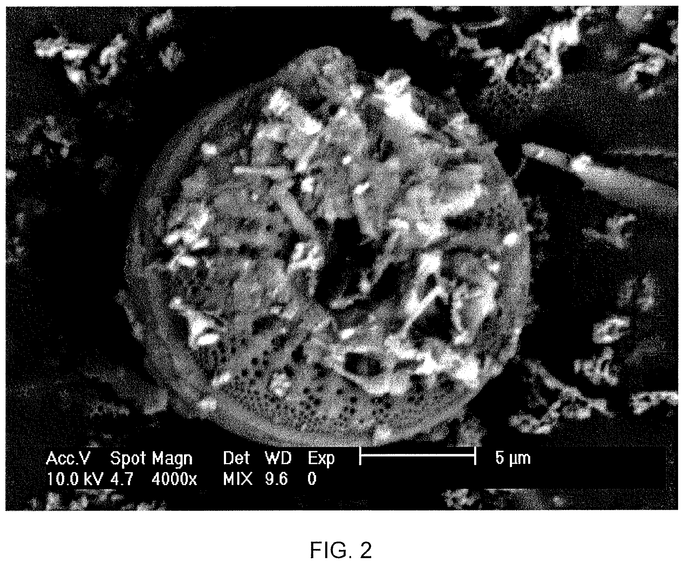

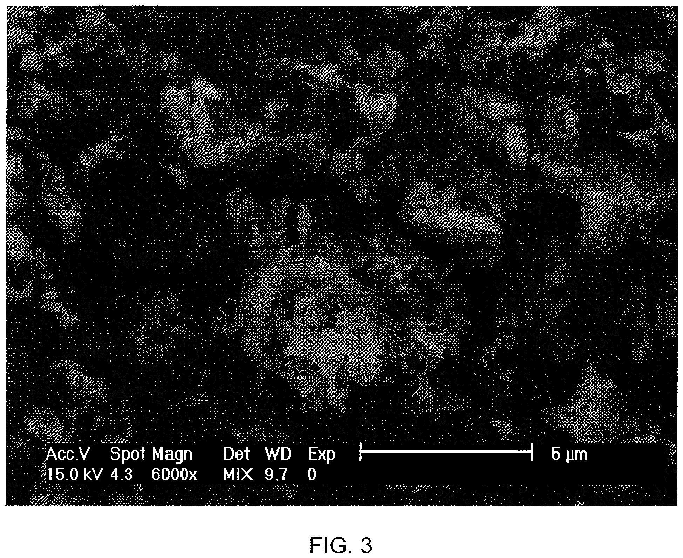

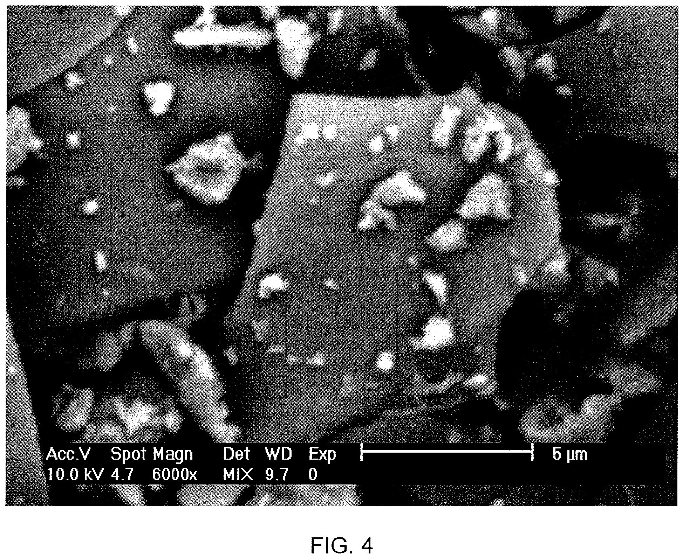

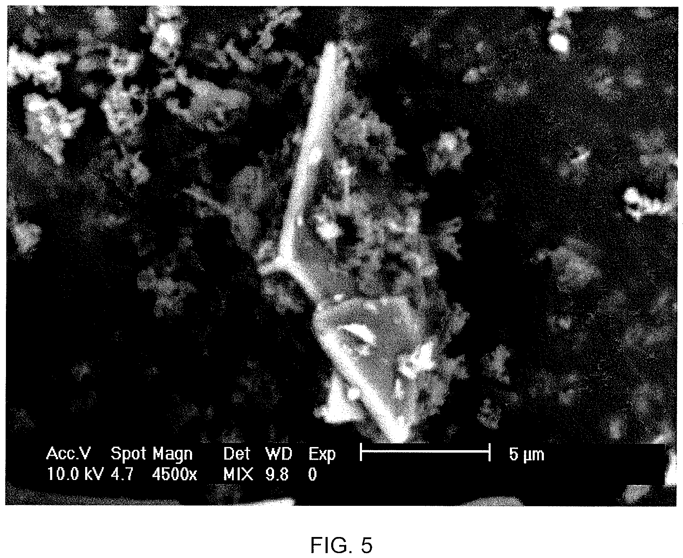

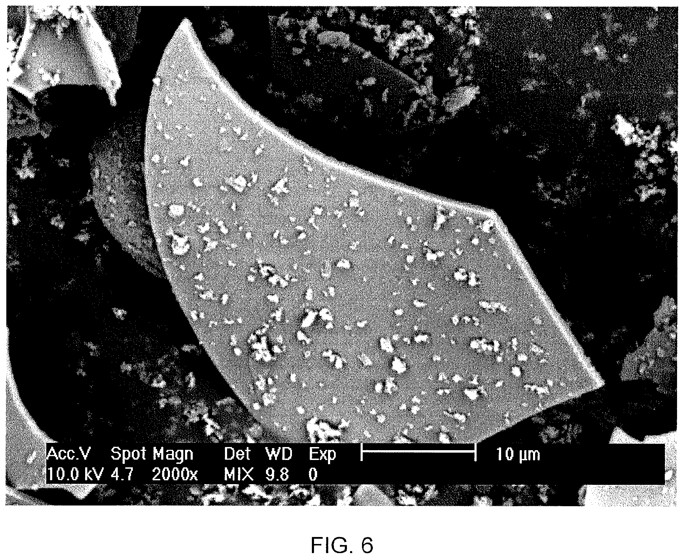

FIGS. 1, 2, 4-6 show exemplary agglomerated mineral composites. FIG. 1 shows an exemplary agglomerated mineral composite including diatomaceous earth and calcium carbonate. FIG. 2 shows an exemplary agglomerated mineral composite including diatomaceous earth and kaolin. FIG. 3 shows an agglomerated mineral composite including kaolin and calcium carbonate. FIG. 4 shows an exemplary agglomerated mineral composite including perlite and calcium carbonate. FIGS. 5 and 6 show exemplary agglomerated mineral composites including perlite and kaolin.

In the examples above, according to some embodiments, the calcined kaolin may include fine grade calcined kaolin, such as marketed under the trade name NEOGEN® (e.g., NEOGEN® 2000) or POLESTAR® (e.g., POLESTAR@ 400P) calcined kaolin, marketed by Imerys Performance Minerals. The kaolin may include calcined kaolin, such as marketed by Imerys Pigments under the trade names ALPHATEX™ or ALPHATEX HP™, or by Imerys Minerals Ltd. under the trade name SUPREME™. According to some embodiments, the diatomaceous earth may include natural grade diatomaceous earth, such as marketed by World Minerals, Inc., under the trade name CELTIX®. According to some embodiments, the $TiO_2$ may be pigment-grade $TiO_2$, such as marketed by DuPont under the trade name TI-PURE® (e.g., TI-PURE® R-706). According to some embodiments, the calcium carbonate may include ground calcium carbonate, such as marketed by Imerys Performance Minerals under the trade names DRIKALITE® or ATOMITE®, or marketed by Imerys Minerals Ltd. under the trade name CARBITAL™. According to some embodiments, the perlite may include perlite for additives, such as marketed by Imerys Filtration Minerals under the trade name OPTIMAT™.

Other embodiments of the invention will be apparent to those skilled in the art from consideration of the specification and practice of the exemplary embodiments disclosed herein. It is intended that the specification and examples be considered as exemplary only, with a true scope of the invention being indicated by the following claims.

**Claims**

1. An agglomerated mineral composite coating composition comprising:

   a coating vehicle;
   an agglomerated mineral composite including

   a first inorganic particulate mineral chosen from the group consisting of diatomaceous earth and perlite,
   a second inorganic particulate mineral chosen from the group consisting of an aluminosilicate, talc, and an alkali earth metal carbonate, and
   a binder, wherein the binder facilitates agglomeration of the first inorganic particulate mineral and the second inorganic particulate mineral.

2. The agglomerated mineral composite coating composition of claim 1, further comprising not more than 10% by weight titanium dioxide relative to the coating composition.

3. The agglomerated mineral composite coating composition of claim 1, wherein the aluminosilicate comprises kaolin.

4. The agglomerated mineral composite coating composition of claim 1, wherein the first inorganic particulate mineral comprises diatomaceous earth, and the second inorganic particulate mineral comprises kaolin.

5. The agglomerated mineral composite coating composition of claim 1, wherein the first inorganic particulate mineral comprises perlite, and the second inorganic particulate mineral comprises kaolin.

6. The agglomerated mineral composite coating composition of claim 1, wherein the binder comprises an inorganic binder.

7. The agglomerated mineral composite coating composition of claim 6, wherein the inorganic binder comprises an alkali metal silicate or a cement.

8. The agglomerated mineral composite coating composition of claim 6, wherein the inorganic binder comprises a magnesium aluminum silicate clay.

9. The agglomerated mineral composite coating composition of claim 1, wherein the binder comprises an organic-to-inorganic binder.

10. The agglomerated mineral composite coating composition of claim 9, wherein the organic-to-inorganic binder comprises at least one of silicone or ethyl silicate.

11. The agglomerated mineral composite coating composition of claim 1, wherein the binder comprises an organic binder.

12. The agglomerated mineral composite coating composition of claim 1, wherein the agglomerated mineral composites have a median particle size ($d_{50}$) substantially similar to the $d_{50}$ of an unagglomerated mixture of the same constituents used to form the agglomerated mineral composites.

13. The agglomerated mineral composite coating composition of claim 1, having an oil absorption ranging between 50% and 200%.

14. The agglomerated mineral composite coating composition of claim 1, wherein the coating composition is selected from a paint, a sealant, an architectural coating, or an industrial coating.

**Patentansprüche**

1. Agglomerierte mineralische Verbundbeschichtungszusammensetzung, umfassend:

   ein Beschichtungsvehikel;
   einen agglomerierten Mineralverbundstoff, einschließlich
   eines ersten anorganischen teilchenförmigen Minerals, ausgewählt aus der Gruppe bestehend aus Diatomeenerde und Perlit,
   eines zweiten anorganischen teilchenförmigen Minerals, ausgewählt aus der Gruppe bestehend aus einem Aluminosilikat, Talkum und einem Erdalkalimetallcarbonat, und
   eines Bindemittels, wobei das Bindemittel eine Agglomeration des ersten anorganischen teilchenförmigen Minerals und des zweiten anorganischen teilchenförmigen Minerals fördert.

2. Agglomerierte mineralische Verbundbeschichtungszusammensetzung gemäß Anspruch 1, ferner umfassend nicht mehr als 10 Gewichtsprozent Titandioxid bezogen auf die Beschichtungszusammensetzung.

3. Agglomerierte mineralische Verbundbeschichtungszusammensetzung gemäß Anspruch 1, wobei das Aluminosilikat Kaolin umfasst.

4. Agglomerierte mineralische Verbundbeschichtungszusammensetzung gemäß Anspruch 1, wobei das erste anorganische teilchenförmige Mineral Diatomeenerde und das zweite anorganische teilchenförmige Mineral Kaolin umfasst.

5. Agglomerierte mineralische Verbundbeschichtungszusammensetzung gemäß Anspruch 1, wobei das erste anorganische teilchenförmige Mineral Perlit und das zweite anorganische teilchenförmige Mineral Kaolin umfasst.

6. Agglomerierte mineralische Verbundbeschichtungszusammensetzung gemäß Anspruch 1, wobei das Bindemittel ein anorganisches Bindemittel umfasst.

7. Agglomerierte mineralische Verbundbeschichtungszusammensetzung gemäß Anspruch 6, wobei das anorganische Bindemittel ein Alkalimetallsilikat oder einen Zement umfasst.

**8.** Agglomerierte mineralische Verbundbeschichtungszusammensetzung gemäß Anspruch 6, wobei das anorganische Bindemittel einen MagnesiumAluminiumsilikat-Ton umfasst.

**9.** Agglomerierte mineralische Verbundbeschichtungszusammensetzung gemäß Anspruch 1, wobei das Bindemittel ein organisch-zu-anorganisches Bindemittel umfasst.

**10.** Agglomerierte mineralische Verbundbeschichtungszusammensetzung gemäß Anspruch 9, wobei das organisch-zu-anorganische Bindemittel mindestens eines von Silikon oder Ethylsilikat umfasst.

**11.** Agglomerierte mineralische Verbundbeschichtungszusammensetzung gemäß Anspruch 1, wobei das Bindemittel ein organisches Bindemittel umfasst.

**12.** Agglomerierte mineralische Verbundbeschichtungszusammensetzung gemäß Anspruch 1, wobei die agglomerierten Mineralverbundstoffe eine mittlere Teilchengröße (dso) aufweisen, die im Wesentlichen ähnlich wie die $d_{50}$ eines nicht agglomerierten Gemischs aus denselben Bestandteilen ist, die verwendet werden, um die agglomerierten Mineralverbundstoffe zu bilden.

**13.** Agglomerierte mineralische Verbundbeschichtungszusammensetzung gemäß Anspruch 1, die eine Ölabsorption in einem Bereich zwischen 50 % und 200 % aufweist.

**14.** Agglomerierte mineralische Verbundbeschichtungszusammensetzung gemäß Anspruch 1, wobei die Beschichtungszusammensetzung ausgewählt ist aus einer Farbe, einem Dichtungsmittel, einer architektonische Beschichtung oder einer industriellen Beschichtung.

**Revendications**

**1.** Une composition de revêtement composite minéral aggloméré comprenant :

un véhicule de revêtement ;
un composite minéral aggloméré comprenant
un premier minéral particulaire inorganique choisi dans le groupe constitué par la terre de diatomées et la perlite,
un deuxième minéral particulaire inorganique choisi dans le groupe constitué par un aluminosilicate, le talc, et un carbonate de métal alcalino-terreux, et
un liant, dans laquelle le liant facilite l'agglomération du premier minéral particulaire inorganique et du deuxième minéral particulaire inorganique.

**2.** La composition de revêtement composite minéral aggloméré selon la revendication 1, comprenant en outre pas plus de 10 % en poids de dioxyde de titane par rapport à la composition de revêtement.

**3.** La composition de revêtement composite minéral aggloméré selon la revendication 1, dans laquelle l'aluminosilicate comprend du kaolin.

**4.** La composition de revêtement composite minéral aggloméré selon la revendication 1, dans laquelle le premier minéral particulaire inorganique comprend de la terre de diatomées, et le deuxième minéral particulaire inorganique comprend du kaolin.

**5.** La composition de revêtement composite minéral aggloméré selon la revendication 1, dans laquelle le premier minéral particulaire inorganique comprend de la perlite, et le deuxième minéral particulaire inorganique comprend du kaolin.

**6.** La composition de revêtement composite minéral aggloméré selon la revendication 1, dans laquelle le liant comprend un liant inorganique.

**7.** La composition de revêtement composite minéral aggloméré selon la revendication 6, dans laquelle le liant inorganique comprend un silicate de métal alcalin ou un ciment.

**8.** La composition de revêtement composite minéral aggloméré selon la revendication 6, dans laquelle le liant inorganique comprend une argile de silicate de magnésium et d'aluminium.

9. La composition de revêtement composite minéral aggloméré selon la revendication 1, dans laquelle le liant comprend un liant organique à inorganique.

10. La composition de revêtement composite minéral aggloméré selon la revendication 9, dans laquelle le liant organique à inorganique comprend au moins un parmi le silicone ou le silicate d'éthyle.

11. La composition de revêtement composite minéral aggloméré selon la revendication 1, dans laquelle le liant comprend un liant organique.

12. La composition de revêtement composite minéral aggloméré selon la revendication 1, dans laquelle les composites minéraux agglomérés ont une granulométrie médiane (dso) sensiblement similaire à la $d_{50}$ d'un mélange non aggloméré des mêmes constituants utilisés pour former les composites minéraux agglomérés.

13. La composition de revêtement composite minéral aggloméré selon la revendication 1, ayant une absorption d'huile comprise entre 50 % et 200 %.

14. La composition de revêtement composite minéral aggloméré selon la revendication 1, dans laquelle la composition de revêtement est choisie parmi une peinture, un agent d'étanchéité, un revêtement architectural, ou un revêtement industriel.

FIG. 1

Acc.V  Spot Magn    Det  WD  Exp    5 µm
10.0 kV 4.7  4000x   MIX  9.6  0

FIG. 2

Acc.V  Spot Magn    Det  WD  Exp ├─────────────────┤ 5 µm
15.0 kV 4.3  6000x   MIX  9.7  0

FIG. 3

FIG. 4

Acc.V Spot Magn   Det WD  Exp
10.0 kV 4.7  4500x   MIX 9.8  0                    5 μm

FIG. 5

FIG. 6

**EP 3 116 946 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013014450 A1